# EUROPEAN PATENT APPLICATION

(11) **EP 4 763 302 A1**
(43) Date of publication of application: **24.06.2026**
(21) Application number: 25178224.9
(22) Date of filing: 22.05.2025
(51) Int. Cl.: B01D 3/20

(54) **BUBBLE CAP TRAY FOR THE DISTILLATION COLUMN OF THE REACTION FLUID IN THE PRODUCTION OF SODA ASH USING THE AMMONIA METHOD**

(30) Priority: 20.12.2024 EP 24222536
(71) Applicant: Qemetica Soda Polska Spolka Akcyjna, 88-101 Inowroclaw (PL)
(72) Inventor: Sobczak, Waldemar, Inowroclaw (PL); Zastawny, Mariusz, Krakow (PL); Hebda, Maciej, Wola Debinska (PL); Szczurzydlo, Mariusz, Krakow (PL); Jamroz, Jakub, Rzepiennik Strzyzewski (PL); Skowron, Kazimierz, Inowroclaw (PL); Zorawski, Damian, Nowa Wies Wielka (PL)
(74) Representative: Wroblewski, Marcin Jan

(57) **Abstract**

A bubble cap tray (1) for a distillation column (20) of the reaction fluid in the production of soda ash using the ammonia method comprising a liquid trough (2) with an inner opening (3) of the bubble cap tray (1), an inner cap (4) with an active circumference L1 and external overflows (5), the inner cap (4) being positioned above the inner opening (3) so that the active circumference L₁ of the inner cap (4) is above the liquid trough (2). The bubble cap tray (1) for the distillation column (20) according to the invention is characterized in that the active circumference L₁ of the inner cap (4) is droplet-shaped, and the said bubble cap tray (1) further comprises an interrupted outer ring (6) for fixing on the side wall (21) of the distillation column (20) with its outer edge (7), and within the interruption of the outer ring (6) external overflows (5) are arranged, whereby the diameter of the outer edge (8) of the liquid trough (2) is smaller than the diameter of the outer edge (7) of the outer ring (6), and the liquid trough (2) is arranged so that the active circumference L₂ of the outer ring (6) is above the liquid trough (2), and so that, after assembly of the bubble cap tray (1) in the distillation column (20), there is an outer gap (9) between the outer edge (8) of the liquid trough (2) and the side wall (21) of the distillation column (20). Advantageously, the bubble cap tray (1, 1', 1") for the distillation column (20) according to the invention also has an element for adjusting the liquid level in the liquid trough (11), and a closable desludging gap (13) for removing solids deposited at the bottom of the liquid trough (2).

## Description

### Technical Field

The object of the invention is a bubble cap tray for the distillation column of the reaction fluid in an integrated soda ash production system using the ammonia method. Distillation columns of this type are commonly used in the method of soda ash production with ammonia recovery.

### Description of the Prior Art

The method of producing synthetic soda ash using the ammonia method has been known for about 150 years. This process, the production of soda ash using the ammonia method, has been taken into account by the European Commission in the document entitled 'Soda ash in the EU'. "Reference Document on Best Available Techniques for the Manufacture of Large Volume Inorganic Chemicals - Solids and Others industry" - point 2 "Soda ash".

An integral part of the overall plant for the production of synthetic soda ash using the ammonia method is the waste liquid distillation plant.

The main indicators that affect the quality of the distillation of the waste fluid are the heat consumption in the form of the amount of steam entering the distillation column and the ammonia loss in the fluid leaving the distillation column. Pressures inside the distillation column are also important for the distillation process. So-called vacuum distillation columns (operating at a pressure below atmospheric pressure) and pressure distillation columns with a maximum pressure of 1.8 bar(a) at the bottom of the column and a maximum of 1.3 bar(a) at the top of the column are known.

Pressure distillation columns allow an increase in apparatus capacity compared to vacuum distillation columns of the same diameter. As a result, most of the known plants are now operating in a pressurised system.

The pressure difference depends on the resistance of the distillation column itself. A minimum drop in this pressure is sought, while maintaining optimum operating parameters. However, the pressure drop is variable over time and depends on the deposition of sediment inside the column.

Currently in use are distillation columns with bubble cap trays, distillation columns with sieve plates and distillation columns with mixed (sieve and bubble cap) trays. Each of these solutions has its advantages and disadvantages.

Each distillation column must be cleaned periodically, due to the accumulation of various chemical compounds including sulphates.

The advantage of columns with sieve plates is that they are much easier to clean than columns with bubble cap trays. Distillation columns with bubble cap trays, on the other hand, are more flexible in terms of capacity fluctuations, without changing the inner configuration of the column. Distillation columns with bubble cap trays, also provide better selectivity and flexibility for variable load operation.

Modifications of bubble cap trays compared to the classic solution usually increase the complexity of their cleaning, due to problems such as the lack of access or difficult access to the spaces between plates, the impossibility of hydrodynamic cleaning of the main plate elements, and the problem of accessing all plate elements for manual cleaning.

Distillation columns with bubble cap trays can have inner as well as external overflows. External overflows facilitate cleaning of the column, increase the active cross-section of the plate where desorption takes place, and also allow for easier removal of deposits such as sand, preventing blockages that can lead to the apparatus being taken out of service.

The ammonia method of soda production requires the recovery of ammonia from ammonium chloride, among other compounds. This compound does not decompose directly in the distillation process, so an intermediate stage is used in which the liquid containing ammonium chloride is mixed with lime milk. During this mixing (in an outer apparatus called a PLM), the following reaction takes place:

2NH₄Cl + Ca(OH)₂ → 2NH₃ + CaCl₂ + 2H₂O (1)

As the reaction is carried out in an aqueous medium, ammonia is obtained in the form of hydrated NH₄OH and, in this form, ammonia is introduced into the distillation column, where the ammonia is desorbed by steam fed from below. In addition, the following reactions take place in the process:

Na₂SO₄ + CaCl₂ → 2NaCl + CaSO₄ (2)

(NH₄)₂SO₄ + CaCl₂ → 2NH₄Cl + CaSO₄ (3)

As can be seen, reaction (3) in combination with reaction (1) allows for the recovery of bound ammonia. Reactions (2) and (3), on the other hand, produce calcium sulphate, which in its hydrated form is gypsum and is the main culprit in the accumulation of sludge in the distillation columns, necessitating their periodic cleaning.

In addition, lime milk, which is made from quicklime produced from limestone in lime kilns, has a number of impurities of varying sizes (generally less than one millimetre) that are insoluble. The solid parts contained in the lime milk are, for example, quartz sand and fine particles of calcium carbonate.

Designers of distillation columns for the soda industry aim, through appropriate modification of their design, to minimise sediment accumulation in the columns and reduce the deposition of solids inside the columns. This can be achieved in particular through the appropriate design of the tray itself.

Older distillation columns have cleaning mechanisms in the form of scraper chains that are externally actuated, extending the life of the column to six months, compared to a typical operating time of around 90 days. Some designs also used scrapers rotating at 20 revolutions per minute on the three plates of the distillation column, which also contributed to extending its service life (cleaning intervals).

One of the more interesting designs are the French multi-bell distillation columns, which have a larger gas-liquid exchange surface area compared to single-bell trays. Despite the circulating view that multi-bell plates are less efficient in processes with sediments, these units allow higher distillation yields with a smaller column diameter.

Increasing the flow rate of the filter liquor can increase the efficiency of the distillation column. This can also lead to the phenomenon known as choking, when the gas flow velocity reaches a critical value and droplets of liquid are lifted from lower plates to higher ones. As a result, absorption takes place on the higher plates instead of distillation, which disrupts the process and reduces the efficiency of the unit. This phenomenon is particularly exacerbated when the overflows of the distillation column become partially blocked with sediment. In such cases, the gas flow velocity in the column should not exceed 0.9 to 1.8 m/s.

In addition, the diameter of the distillation column has a significant impact on its efficiency. The larger diameter allows an increase in the flow rate of both liquids and gases, as well as an increase in the phase-change surface area. The most efficient columns, such as the French multi-bell distillation columns, have higher efficiencies due to their larger active tray circumference and larger bell neck cross-section compared to classical columns.

The determinant of tray efficiency is the active circumference of the tray and the cross-section of the bell neck (or the sum of the cross-sections in the case of multi-bell trays). In the case of French multi-bell distillation columns, the active tray circumference can be up to six times that of classic columns, allowing higher yields with fewer trays.

An example of distillation columns in use today is a 3.5m diameter carbon steel welded column containing 11 trays and external overflows. These columns have different types of trays, allowing an assessment of their performance including the frequency of cleaning and the scope of work for this activity.

The column is additionally equipped with a vapour dosing system from the bottom of the apparatus and a system for separating liquid droplets in the gas fed to the next apparatus. This separation is very important, as the gas can also entrain solid impurities that could cause sediment accumulation in the previous apparatus. Separation is also important so that distillation efficiency is not compromised.

The bubble cap tray, together with the entire distillation column, is designed for the nominal capacity of the column. With large fluctuations in production, we can expect negative phenomena that will reduce the efficiency of the process itself and may also affect the cleaning interval of this equipment.

Increased efficiency - increasing the gas velocity in the free section of the apparatus can result in reduced selectivity, by flipping the liquid between the trays, and can also result in increased flow resistance by increasing the liquid level on the tray until the flow is suspended.

The reduction in capacity results in a reduction in sparging height and a reduction in the velocity of the fluid on the shelf. This can, of course, reduce the overall efficiency of the tray as well as affecting the accumulation of deposits on the tray much more quickly, as there will be no driving force to transport these particles to the overflow.

Therefore, there is a need to provide a new bubble cap tray, the design of which will minimise the problems / shortcomings of the current bubble cap trays, especially the single bubble cap trays.

### The essence of the invention

The object of the invention is a bubble cap tray for the distillation column of the reaction fluid in the production of soda ash using the ammonia method, comprising a liquid trough with an inner opening, an inner cap with an active circumference L₁ and external overflows. The inner cap is positioned over the inner bore so that the active circumference L₁ of the inner cap is over the liquid trough. The essence of the bubble cap tray according to the invention is that the active circumference L₁ of the inner cap is droplet-shaped. The aforementioned bubble cap tray additionally contains an incomplete outer ring for attachment to the side wall of the distillation column with its outer edge, and external overflows are located within the outer ring break.

In addition, the diameter of the outer edge of the liquid trough is smaller than the diameter of the outer edge of the outer ring. The liquid trough is arranged so that the active circumference L₂ of the outer ring is above the liquid trough. When the bubble cap tray is installed in the distillation column, there is an outer gap between the outer edge of the liquid trough and the side wall of the distillation column.

The design of the bubble cap tray according to the invention maximised the mass and heat transfer surface area of the plate by extending the gas-liquid contact edge. The outer ring used in the bubble cap tray increases the active circumference of the plate compared to a standard plate with a single cap by up to 36%, which translates directly into a larger sparging surface area and thus increased plate efficiency.

The use of a water droplet-like inner cap eliminates dead zones near the overflows and minimises differences in liquid flow velocities across the shelf. Not only does this increase the phase contact area, but it also homogenises the liquid flow velocity on the plate and introduces additional sparging in the area of the overflows, further increasing the efficiency of the cap tray.

The elimination of dead zones on the shelf in the vicinity of the overflows, by introducing additional turbulence in the movement of the liquid directly at the overflows, also has a positive effect on reducing the build-up of sediment in these areas, particularly at reduced column capacity.

The shape of the inner cap, which is a convex cover covering the inner opening of the plate, together with the shape of the outer ring (inclined towards the liquid trough), means that gas entering from the lower plate through the inner opening and outer slit is directed below the surface area of the liquid in the liquid trough, and droplets separating on these elements flow partly into the liquid trough and partly onto the lower bubble cap tray.

Advantageously, the outer ring of the bubble cap tray comprises outer ring supports mounted to the side wall of the distillation column (column jacket). Advantageously, the supports of the outer ring are arranged in such a way that they are above the liquid level in the liquid trough when the distillation column is mounted. By using outer ring supports that are not in contact with the liquid trough, no areas are created where solids can accumulate. This has the beneficial effect of minimising the amount of deposits on the shelf.

Advantageously, the inner cap is fixed to the liquid trough via the inner cap supports. The use of such inner cap supports minimises the contact of these supports with the liquid, which has the effect of reducing the deposition of solids from the liquid in the liquid trough.

Advantageously, the liquid trough comprises liquid trough supports fixed to the side wall of the distillation column. Advantageously, the liquid trough supports are attached to the sloping side wall of the liquid trough above the bottom of the liquid trough. This increases the convenience of servicing thecolumn - increasing the free service space.

Advantageously, the external overflow of the bubble cap tray according to the invention includes an element for adjusting the liquid level in the liquid trough at different operating loads of the distillation column. Such an element could, for example, be a chicane. With different loads, the aforementioned element is designed to adjust the height of the liquid level in the liquid trough. The overflow height adjustment used, allows the plate operating conditions (height of the liquid on the plate) to be kept stable with varying performance throughout the column. For example, with a reduced plate capacity, the height of the liquid above the fixed baffle in the overflow is also reduced. In order to maintain a constant sparging height and thus plate efficiency and resistance, the overflow height can be increased for longer underproduction to achieve constant plate performance.

Advantageously, the bubble cap tray is adapted to remove solids from the liquid trough. For example, the external overflow contains a desludging gap, located at the height of the bottom of the liquid trough, which allows solids to be removed from the bottom of the liquid trough of the plate. This allows solids to be removed from the cap tray which, due to the reduced turbulence of the flow or their size, cannot be lifted and will not overflow the top of the overflow. The use of a desludging gap or other means of removing solids from the bottom of the liquid cap tray trough allows the distillation column to operate for longer periods between cleanings.

If a desludging gap is used in the external overflow, the bubble cap tray also includes a component for closing it. This element is usually opened completely when cleaning the column. Advantageously, the element for closing the desludging gap is also adapted to adjust the clearance of the desludging gap during operation of the column. Thus, while significantly reducing the capacity of the cap tray, it is possible to reduce the height of the desludging gap to prevent excessive liquid leakage at the bottom of the plate.

Advantageously, the P₅ surface area of the gas discharge from the inner opening is greater than or equal to the P₁ surface area of the gas discharge from the inner cap. In turn, the P₃ surface area of gas outflow from the outer gap is advantageously greater than or equal to the P₂ surface area of gas outflow from the outer ring. This makes it possible to establish the main resistance to gas flow in the part of the contact with the liquid, and to maintain similar resistances to gas flow before it comes into contact with the liquid.

Advantageously, the ratio of the active circumference L₂ of the outer ring to the active circumference L₁ of the inner cap is approximately equal to the ratio of the P₂ surface area of gas outflow from the outer ring to the P₁ surface area of gas outflow from the inner cap.

Fulfilment of the condition L₂/L₁ ≈ P₂/P₁ contributes to maintaining a proportional distribution of gas flow depending on the active circumference of the inner cap and the outer ring, which allows the cap tray to achieve equal efficiency throughout its operating (sparging) range.

The hatches located on the outer ring (hatches located at the top of the ring) allow easier mechanical cleaning of the liquid trough and also allow visual inspection of all surface areas.

It is also recommended that the inner cap contains at least one hatch. The use of a hatch in the inner cap allows for easier ventilation of the entire column when it is opened. It also allows the hydrodynamic cleaning of multiple cap trays from a single location by inserting a hydrodynamic cleaning head in the top cap tray and vertically draining this head or using a fixed, folding cleaning system.

Another aspect of the invention also provides a distillation column for the reaction fluid in the production of soda ash using the ammonia method comprising at least two bubble cap trays according to the first aspect of the invention, the overflows of the adjacent bubble cap trays being arranged with respect to the longitudinal axis of the distillation column such that, during operation of the distillation column, the reaction fluid in the production of soda ash using the ammonia method flows through the overflow of the first plate and flows into the liquid trough of the second plate. In turn, the post-reaction fluid flowing out of the second plate flows through its overflow and into the liquid trough located at the height of the third plate, and so on.

Advantageously, the distillation column contains at least one hatch located in the side wall above the outer ring of each bubble cap tray. This facilitates both the handling of the column and the replacement of dismantled components, which are dimensioned so that they can be removed through hatches.

Advantageously, the distillation column comprises individual hatches located in the side wall of each of the external overflows of the cap plates mounted in the column. The size of these hatches is selected so that the hatch covers the entire wall of the overflow. The use of such hatches will allow easy access to the entire inner space of the overflow, its easy cleaning and the adjustment of the height of the liquid level on the cap tray.

### Advantages of the invention

The design of the bubble cap tray according to the invention maximised the mass and heat transfer surface area of the cap tray by extending the gas-liquid contact edge, thereby increasing its efficiency without the use of moving parts that can increase its mechanical wear.

The inner cap used in the solution according to the invention eliminates the so-called dead zones occurring on traditional cap trays in the vicinity of overflows. Not only does this increase the phase contact area, but it also homogenises the liquid flow velocity on the cap tray and introduces additional sparging in the area of the overflow. This minimises the deposition of sediments, including sand, in these areas, especially when column capacity is reduced.

These actions result in virtually equal stress on the gas-liquid interface line. This therefore brings the bubble cap tray according to the invention closer to multi-cap solutions, except that the cleaning process for this cap tray is considerably easier.

The use of different types of hatches in the design according to the invention also facilitates the cleaning of hard-to-reach surface areas and their visual inspection after cleaning.

The bubble cap tray according to the invention provides an increase in efficiency, selectivity and flexibility compared to traditional single bubble cap trays.

The design according to the invention also provides for easier cleaning of the bubble cap trays as well as the distillation columns containing such cap trays.

The shape of the cap tray, together with its height, has the effect of minimising the flipping of liquids between cap trays, thereby increasing cap tray selectivity. This also results in an increase in the efficiency of the actual cap tray, which allows the same efficiencies of the entire distillation to be achieved and a corresponding degree of ammonia loss in the sub-distillation fluid to be achieved with a lower number of bubble cap trays than in the traditional solution.

### Description of figures

The object of the invention is shown in implementation examples in the figure where:
- Fig. 1a:: shows the bubble cap tray according to the invention in top view of the cap tray, with cross-sections A-A, B-B and C-C marked;
- Fig.1b:: shows the bubble cap tray according to the invention in top view of the cap tray, with cross-sections D-D, E-E, F-F, G-G, I-I and detail H marked;
- Fig. 2:: shows a top view of the bubble cap tray according to the invention without the inner cap and outer ring;
- Fig. 3:: shows a B-B cross-section of a distillation column with bubble cap trays according to the invention;
- Fig. 4:: shows a C-C cross-section of a distillation column with bubble cap trays according to the invention;
- Fig. 5:: shows a partial section D-D through the inner cap with the hatch visible;

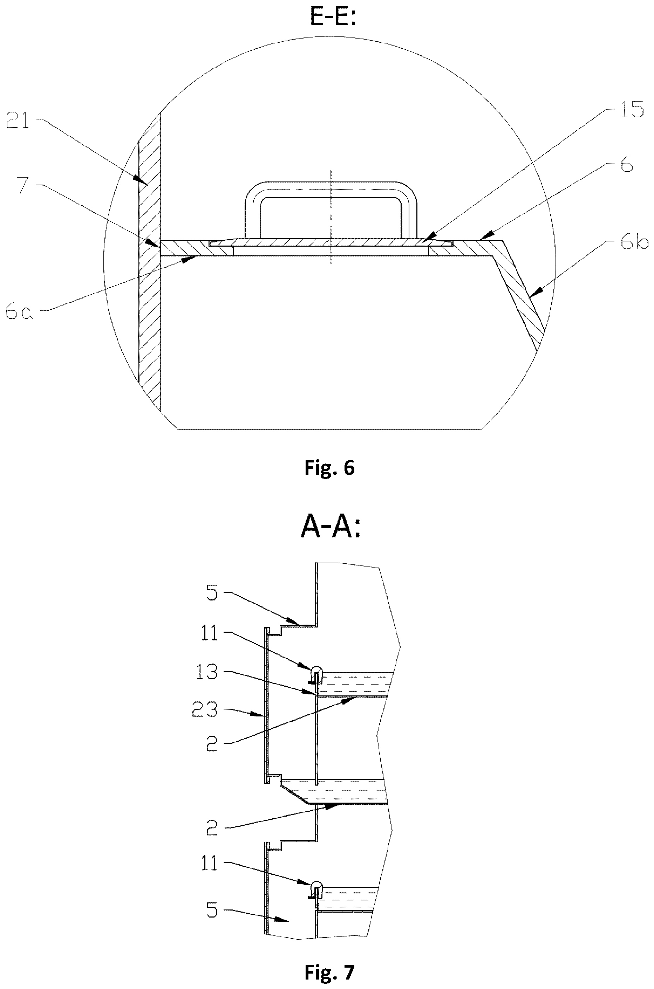

- Fig. 6:: shows a partial section E-E through the inner ring with the hatch visible;
- Fig. 7:: shows a partial cross-section A-A of a distillation column with visible inner overflows of the bubble cap trays according to the invention;
- Fig. 8a:: shows a partial cross-section F-F of the external overflow of the bubble cap tray according to the invention, with the element for adjusting the liquid level in the liquid trough visible;
- Fig. 8b:: shows, in partial top view, the external overflow of the bubble cap tray according to the invention with elements for adjusting the liquid level in the liquid trough;
- Fig. 9a:: shows a partial cross-section G-G of the external overflow of the bubble cap tray according to the invention with an element for closing the desludging gap in the external overflow;
- Fig. 9b:: shows in partial top view the external overflow of the bubble cap tray according to the invention with a component for closing the desludging gap in the external overflow;
- Fig. 10:: shows in top view the hatch closing element;
- Fig. 11:: shows a partial section I-I of the liquid trough, inner cap and outer ring with the supports of the liquid trough, outer ring and inner cap visible;
- Fig. 12:: shows the bubble cap tray according to the invention in cross-section;
- Fig. 13:: shows a cross-section of a distillation column with bubble cap trays according to the invention.

### Detailed description of the invention

### A bubble cap tray for the distillation column of the reaction fluid in the production of soda ash using the ammonia method

A bubble cap tray 1 for the distillation column 20 of the reaction fluid in the production of soda ash using the ammonia method contains a liquid trough 2 with an inner opening 3, an inner cap 4 with an active circumference L₁ in the shape of a water droplet and an external overflow 5.

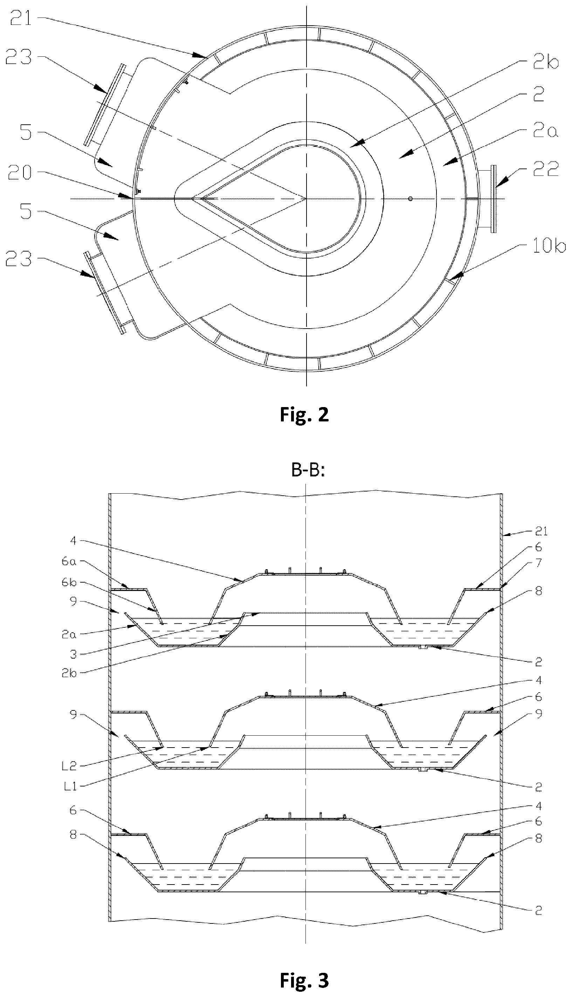

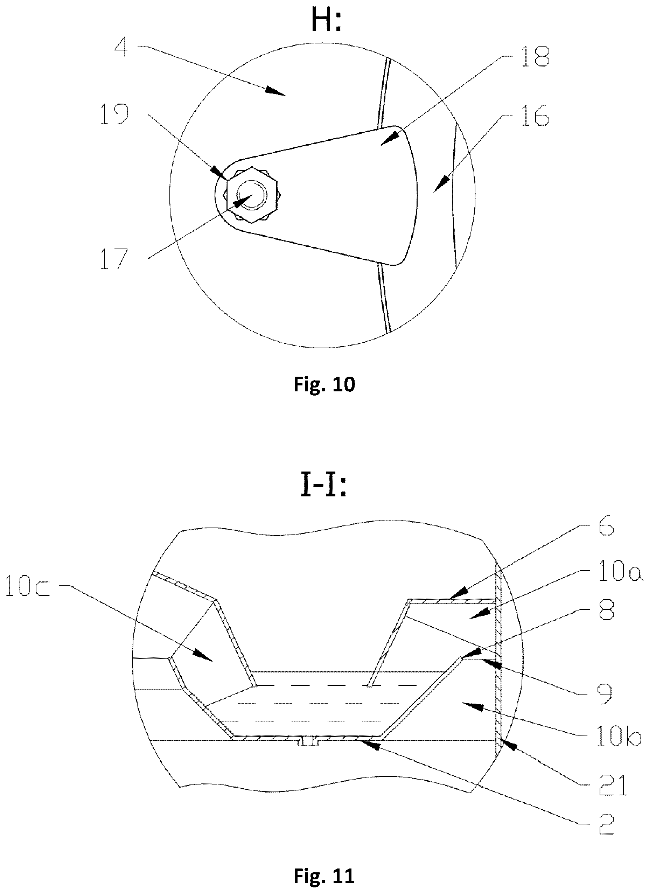

The liquid trough 2 contains inclined side walls 2a and 2b, with the free edge of the inner wall 2b defining the inner opening of the cap tray 3. By shaping the liquid trough 2 in this way, when several bubble cap trays according to the invention are installed in the distillation column, the droplets separating at the bottom of the liquid trough flow down to the lower plate and are not transferred with the gas to the higher plate. The liquid trough 2 can be mounted in the distillation column 20 by means of liquid trough supports 10b, fixed to the side wall 21 of the distillation column 20, as for example shown in Fig. 11. Advantageously, the supports of the liquid trough 10b are made of flat sheet metal. Furthermore, in favourable examples of implementation, the supports of the liquid trough 10b are attached to the inclined side wall 2a above the bottom of the liquid trough 2 as shown in Fig. 3 and Fig. 11. This arrangement allows for an increase in free service space, which enhances the comfort of the distillation column service.

The use of an inner cap 4 with a shape similar to a water droplet eliminates dead zones near the overflows 5 and minimises the differences in liquid flow velocities on the shelf 1 between its sections.

The inner cap 4, which is a convex cover covering the inner opening 3 of the plate 1, causes the gas entering from the lower plate through the inner opening 3 and the outer slit 9 to be directed under the surface area of the liquid in the liquid trough 2.

The inner cap 4 is positioned above the inner opening 3 of the plate 1, so that the active circumference L₁ of the inner cap 4, which is the outer edge of the inner cap, is above the liquid trough 2 so that the droplets separating at the bottom of the cap flow partly into the liquid trough 2 and partly into the lower plate 1.

The bubble cap tray 1 further comprises an interrupted outer ring 6, designed to be mounted on the side wall 21 of the distillation column 20, its outer edge 7. The outer ring 6 is located on the periphery of the bubble cap tray 1, so that the external overflows 5 are located within the interruption of the outer ring 6.

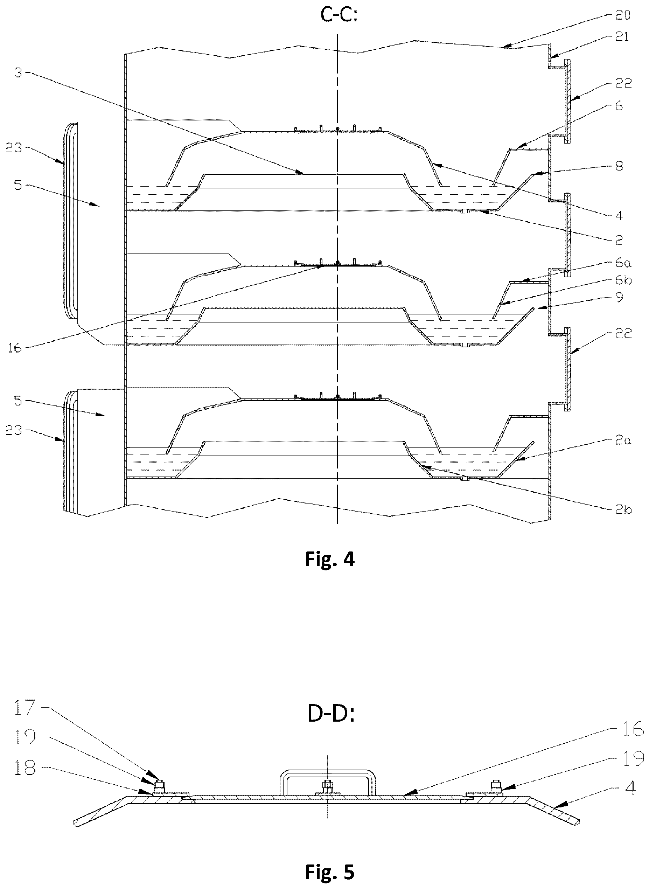

The outer ring 6 is inclined towards the liquid trough 2. In this example implementation, as shown in Fig. 3 and 4, the outer ring 6 comprises an outer part 6a attached to the side wall 21 of the distillation column 20, its outer edge 7, and an inner part 6b which is inclined with respect to the outer part 6a towards the liquid trough 2.

As shown, for example, in Fig. 3, the diameter of the outer edge 8 of the liquid trough 2 is smaller than the diameter of the outer edge 7 of the outer ring 6. When the bubble cap tray 1 is assembled in the distillation column 20, there is an outer gap 9 between the outer edge 8 of the liquid trough 2 and the side wall 21 of the distillation column 20. In this way, gas is also directed from the lower flange under the outer ring 6, from where it is directed into the liquid trough 2 below the liquid surface area.

As shown in Fig. 11 the outer ring 6 further comprises supports for the outer ring 10a for attachment to the side wall 21 of the distillation column 20, which may be made of flat sheet metal. Outer ring supports 10a ensure stable installation of outer ring 6. Advantageously, the supports of the outer ring 10a are fixed substantially perpendicular to the outer edge 7 of the outer ring 6. Advantageously, the supports of the outer ring 10a are arranged in such a way that, when installed in the distillation column 20, they are located above the liquid level in the liquid trough 2.

Similarly, in Fig. 11 shows the attachment of the inner cap 4 to the liquid trough 2 by means of inner cap supports 10c, which can be made of flat sheet metal, for example. Advantageously, such supports of the inner cap 10c are fixed substantially perpendicular with respect to the curve determining the active circumference L₁ of the inner cap 4. This positioning of the inner cap supports 10c favourably influences the flow of liquid in the liquid trough 2 by minimising contact between the inner cap supports 10c and the liquid. This prevents flow disruption and sand accumulation.

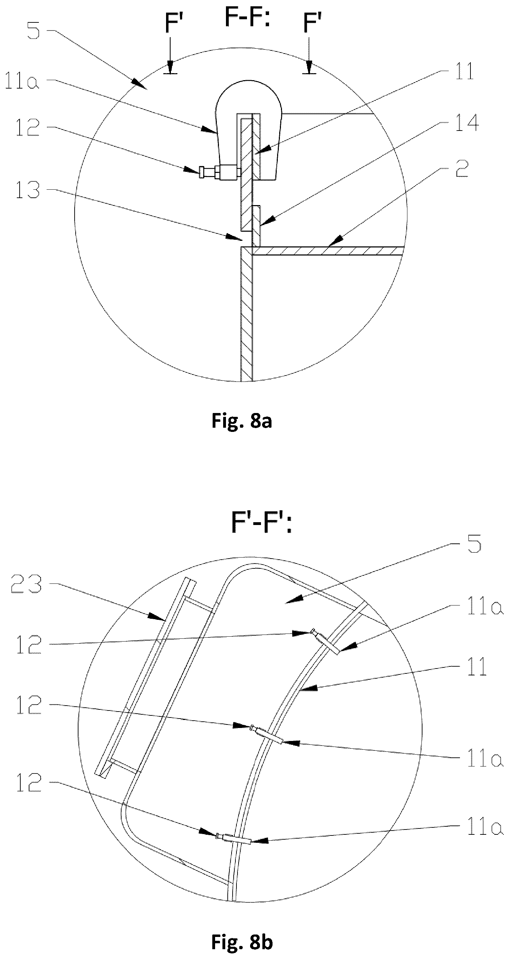

The external overflow 5 contains an element 11 for adjusting the liquid level in the liquid trough 2 at different operating loads of the distillation column 20. As shown in Fig. 8a and 8b, the element 11 is attached to the wall of the external overflow 5 by means of fixings 11a with mechanisms 12 for fixing the position of the element 11 for adjusting the liquid level in the liquid trough 2. Fixings 11a can, for example, take the form of a screw clamp with a pressure screw. Once the presumed liquid level in liquid trough 2 has been determined, the pressure screw is tightened to fix the position of element 11 for adjusting the liquid level in liquid trough 2.

The external overflow 5 also contains a desludging gap 13 at the height of the bottom of the liquid trough 2 and a component 14 for closing the desludging gap 13. The desludging gap 13 allows solids to be removed from liquid trough 2 (bottom of cap tray) which, due to reduced turbulence of the flow or their size, cannot be lifted and will not overflow through the top of overflow 5. The use of desludging gap 13 allows the distillation column to operate for longer periods of time between cleanings. In other implementation examples, other means may be used to remove solids from the bottom of the liquid trough 2 of the bubble cap tray 1.

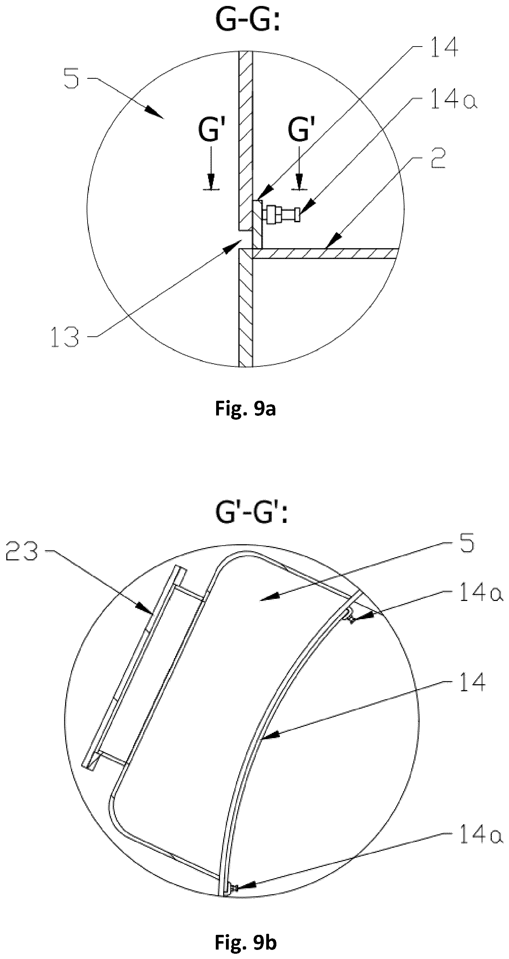

In the illustrated example of the implementation of the invention, the component 14 for closing the desludging gap is adapted to adjust the clearance of the desludging gap 13, by using a mechanism 14a fixing the position of element 14 for closing the desludging gap relative to the bottom of the liquid trough 2 as shown in Fig. 9a and 9b.

In order to maintain a proportional distribution of the gas flow depending on the active circumference L₁ of the inner cap and the active circumference L₂ of the outer ring, it is recommended that the specified dimensional relationships of the bubble cap tray parts are met.

Advantageously, the P₅ surface area of gas outflow from the inner opening 3 should be greater than or equal to the P₁ surface area of gas outflow from the inner cap 4. Also advantageously, the P₃ surface area of gas outflow from the outer slot 9 should be greater than or equal to the P₂ surface area of gas outflow from the outer ring 6. In an equally advantageous example of the implementation of the invention, the ratio of the active circumference L₂ of the outer ring 6 to the active circumference L₁ of the inner cap 4 is approximately equal to the ratio of the P₂ surface area of gas outflow from the outer ring to the P₁ surface area of gas outflow from the inner cap 4.

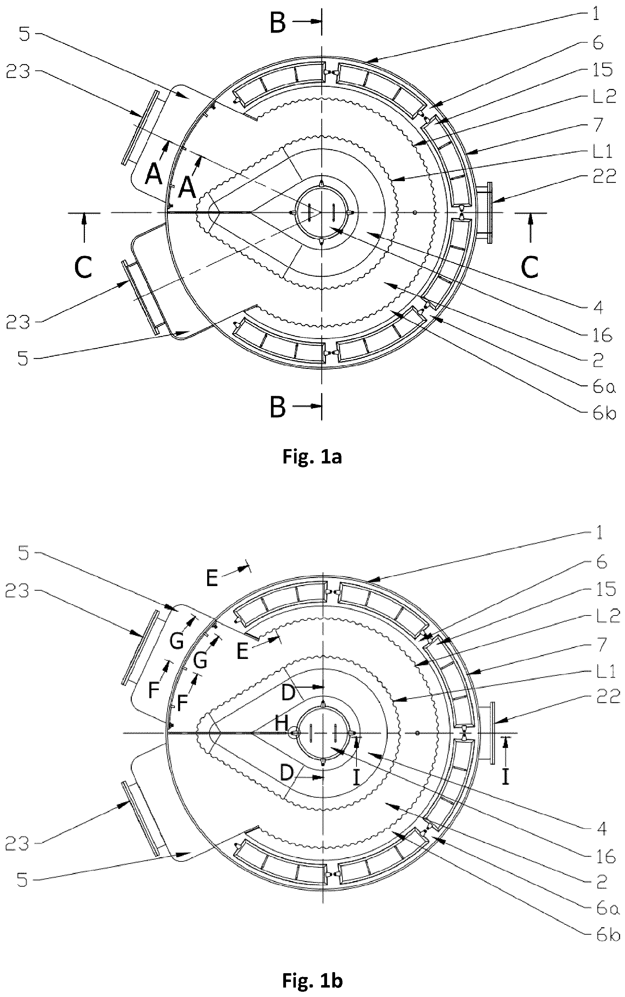

In order to allow easy mechanical cleaning of the liquid trough 2 on the inner side and to ensure visual inspection of all surface areas, the outer ring 6 comprises hatches 15, which are advantageously mounted in its outer part 6a. The number of hatches 15 is arbitrary, with the example shown in Fig. 1 six hatches were installed 15.

The bubble cap tray according to the invention also comprises a hatch 16 fixed in the inner cap 4. Similar to the outer ring 6, the hatch 16 is advantageously mounted in the upper part of the inner cap 4. In other implementation examples, the inner cap 4 may contain a greater number of hatches 16.

Fig. 10 shows an example of how the hatches 15 of the outer ring 6 and the hatches 16 of the inner cap 4 can be easily and quickly removed, regardless of the degree of overgrowth with solid parts or corrosion of the screws. The hatches 15, 16 are fixed by a series of pivotally mounted, on pins 17, locking elements 18. The locking elements are secured with nuts 19. There are no small parts that could fall onto the lower plate during dismantling, which removes the danger for repair crews as well as minimising the time required for removal and installation of hatches 15, 16. What's more, this way of mounting means that these components will be able to be removed from the distillation column to the outside, which will make cleaning and service work inside the column itself much easier.

### Distillation column of the reaction fluid in the production of soda ash using the ammonia method

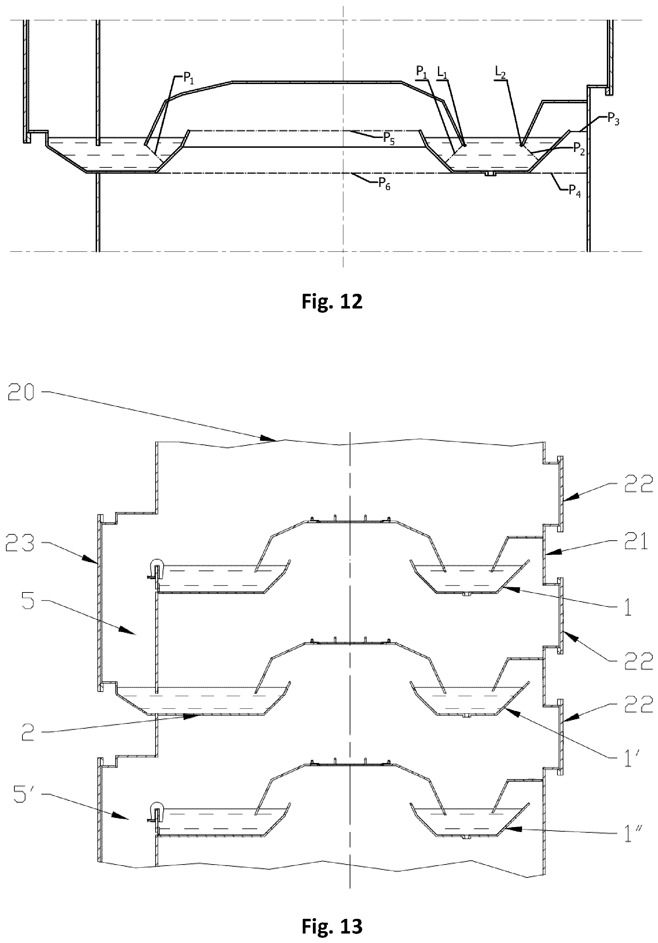

Fig. 13 shown is a section of an exemplary distillation column 20 of reaction fluid in ammonia soda ash production with three visible bubble cap trays according to the first aspect of the invention, the overflows 5 of the adjacent bubble cap trays being arranged relative to the longitudinal axis of the distillation column 20 such that the reaction fluid in ammonia soda ash production flows through the overflow 5 of plate 1 and flows into the liquid trough 2 of plate 1'. In turn, the post-reaction fluid flowing out of plate 1' flows through overflow 5 of plate 1' and drains into liquid trough 2 of cap tray 1'.

In an advantageous example of the implementation of the invention, the distance between the inner cap 4 and the outer ring 6 is more than 400mm, which is sufficient for a worker to enter the cap tray freely. In contrast, the distance between the 1, 1', 1" plates is advantageously 1.2 m, which allows natural separation of entrained droplets.

The distillation column 20 also includes outer hatches 22 located in the side wall 21 above the outer ring 6 of each of the bubble cap trays 1, 1', 1" and hatches 23 which are located on the external overflows 5 of each bubble cap tray 1, 1', 1". The size of hatches 23 is selected so that hatch 23 covers the entire wall of overflow 5 for easy access for cleaning.

Instead of the previously used two independent hatches on one overflow, one common rectangular hatch was used, which provides easier access for cleaning the entire external overflow.

Hatches 22 and 23 are equipped with hinges that allow them to be removed by one person.

### List of designations:

1, 1', 1" - bubble cap tray
2 - liquid trough
2a, 2b - side walls of the liquid trough
3 - inner cap opening
4 - inner cap
5, 5' - external overflow
6 - broken outer ring
6a -outer part of the outer ring
6b -inner part of the outer ring
7 - outer edge of outer ring
8 - outer edge of the liquid trough
9 - outer cap slot
10a - outer ring support
10b - liquid trough supports
10c - inner cap supports
11 -liquid level control element in the liquid trough
11a - fitting of the liquid level regulation element in the liquid trough
12 -mechanism for determining the position of the liquid level control element in the liquid trough
13 -liquid trough desludging gap
14 -element for closing the desludging gap
14a - mechanism for determining the position of the element for closing the slot
15 - outer ring hatch
16 -inner cap hatches
17 -stem
18 -closing element
19 -lock nut
20 - distillation column
21 - side wall
22, 23 - outer column hatches
P₁ - surface area of gas outflow from the inner cap
P₂ - Surface area of gas outflow from the outer ring
P₃ - Upper surface area of gas outflow from the outer gap
P₄ - Lower surface area of gas outflow from the outer gap
P₅ - Upper surface area of gas outflow from the inner opening
P₆ - Lower surface area of gas outflow from the inner opening
L₁ - Active circumference of the inner cap
L₂ - Active circumference of the outer ring

## Claims

1. A bubble cap tray (1) for a distillation column (20) of the post-reaction fluid in the production of soda ash using the ammonia method comprising a liquid trough (2) with an inner opening (3) of the bubble cap tray (1), an inner cap (4) with an active circumference L₁ and external overflows (5), the inner cap (4) being positioned above the inner opening (3) so that the active circumference L₁ of the inner cap (4) is above the liquid trough (2),
**characterised in that**:
the active circumference L₁ of the inner cap (4) is droplet-shaped, and said bubble cap tray (1) further comprises an interrupted outer ring (6) for mounting on the side wall (21) of the distillation column (20) with its outer edge (7), and within the interruption of the outer ring (6) external overflows (5) are provided, the diameter of the outer edge (8) of the liquid trough (2) being smaller than the diameter of the outer edge (7) of the outer ring (6), and the liquid trough (2) is arranged such that the active circumference L₂ of the outer ring (6) is above the liquid trough (2) and such that, after the assembly of the bubble cap tray (1) in the distillation column (20), there is an outer gap (9) between the outer edge (8) of the liquid trough (2) and the side wall (21) of the distillation column (20).

2. The bubble cap tray according to claim 1, **characterised in that** the outer ring (6) comprises outer ring supports (10a) for attaching to the side wall (21) of the distillation column (20), wherein the outer ring supports (10a) are preferably arranged such that, when mounted in the distillation column (20), they are located above the liquid level in the liquid trough (2).

3. The bubble cap tray according to claim 1 or 2, **characterised in that** the inner cap (4) is fixed to the liquid trough (2) via inner cap supports (10c).

4. A bubble cap tray according to any of the preceding claims, **characterised in that** the liquid trough (2) comprises supports (10b) for attachment to the side wall (21) of the distillation column (20), wherein the liquid trough supports (10b) are preferably attached to an inclined side wall (2a) above the bottom of the liquid trough (2).

5. The bubble cap tray according to any of the preceding claims, **characterised in that** the external overflow (5) comprises at least one element (11) for adjusting the liquid level in the liquid trough (2).

6. The bubble cap tray according to claim 5, **characterised in that** the element (11) for adjusting the liquid level is adapted to adjust the height of the liquid level in the liquid trough (2).

7. The bubble cap tray according to any of the preceding claims, **characterised in that** the external overflow (5) is adapted to remove solid parts from the liquid trough (2).

8. The bubble cap tray according to claim 7, **characterised in that** the external overflow (5) comprises a desludging gap (13) at the height of the bottom of the liquid trough (2) and a component (14) for closing the desludging gap (13).

9. The bubble cap tray according to claim 8, **characterised in that** the element (14) for closing the slot is adapted to adjust the clearance of the desludging gap (13).

10. The bubble cap tray according to any of the preceding claims, **characterised in that** the Ps area of the gas outflow from the inner opening (3) is greater than or equal to the P₁ area of the gas outflow from the inner cap (4), and the P₃ area of the gas outflow from the outer slot (9) is greater than or equal to the P₂ area of the gas outflow from the outer ring (6).

11. The bubble cap tray according to any of the preceding claims, **characterised in that** the ratio of the active circumference L₂ of the outer ring (6) to the active circumference L₁ of the inner cap (4) is approximately equal to the ratio of the area (P2) of the gas outflow of the outer ring to the area (P1) of the gas outflow of the inner cap (4).

12. The bubble cap tray according to any of the preceding claims, **characterised in that** the outer ring (6) comprises at least one hatch (15) and/or the inner cap (4) comprises at least one hatch (16).

13. A distillation column (20) of post-reaction fluid in the production of soda ash using the ammonia method comprising at least two bubble cap trays according to any one of claims 1 to 12, wherein the overflows (5) of adjacent bubble cap trays (1, 1', 1") are arranged with respect to the longitudinal axis of the distillation column (20) such that during operation of the distillation column (20) the post-reaction fluid in the production of soda ash using the ammonia method flows through the overflows (5) of the bubble cap tray (1) and flows into the liquid trough (2) of the bubble cap tray (1'), in turn the post-reaction fluid flowing out of the bubble cap tray (1') flows through the overflows (5) of the bubble cap tray (1') and flows into the liquid trough (2) of the bubble cap tray (1").

14. Distillation column (20) according to claim 13, **characterised in that** it comprises individual outer hatches (23) located in the side wall (21) at the height of the external overflows (5) of the bubble cap tray (1, 1', 1") mounted in the column (20).

15. Distillation column (20) according to claim 14, **characterised in that** the size of the outer hatches (23) is selected so as to cover the entire wall of the external overflow (5).
